# EUROPÄISCHE PATENTANMELDUNG

(11) **EP 2 700 533 A2**
(43) Veröffentlichungstag der Anmeldung: **26.02.2014**
(21) Anmeldenummer: 13450037.0
(22) Anmeldetag: 20.08.2013
(51) Int. Cl.: B60M 1/13

(54) **Vorrichtung zur Kontaktflächenvergrösserung**

(30) Priorität: 24.08.2012 AT 9232012
(71) Anmelder: Ing. Karl u. Albert Kruch GmbH & Co. KG, 1230 Wien (AT)
(72) Erfinder: Röhl, Hans Heinrich, Ing., 1230 Wien (AT)
(74) Vertreter: Rippel, Andreas

(57) **Zusammenfassung**

Bei einer Vorrichtung zur Kontaktflächenvergrößerung zwischen einem Fahrdraht (1) von elektrischen Bahnen und einem Stromabnehmer, wird auf den Fahrdraht (1) ein U-förmiger Bügel (2) aufgesteckt, wobei die beiden Enden der Schenkel (3) des "U" in einer Ebene(4) mit der Kontaktfläche (5) des Fahrdrahtes (1) liegen.

## Beschreibung

Die Erfindung bezieht sich auf eine Vorrichtung zur Kontaktflächenvergrößerung zwischen einem Fahrdraht von elektrischen Bahnen und einem Stromabnehmer.

Neue Straßenbahnen und andere elektrische Bahnen haben durch die steigende Anzahl elektrischer Verbraucher (Vollklimatisierung/Heizung, Fahrgastinformationssysteme, ect.) und immer stärkere Traktionsmotoren eine entsprechend höhere Leistungsaufnahme. Dadurch steigen die Anfahrströme bei Beschleunigungsphasen auf über 2000 A. Dieser Strom muss vom Fahrdraht über Kohleschleifleisten des Stromabnehmers bzw. Pantographen in das Triebfahrzeug geleitet werden. Die Kontaktfläche zwischen Fahrdraht und Schleifleiste ist dabei relativ klein, wodurch sich ein hoher Übergangswiderstand und als Folge thermische Überhitzung und hoher Verschleiß ergibt.

Das gleiche Problem besteht bei längerer Leistungsaufnahme an einem stationären Kontaktpunkt, z.B. Stillstand der Bahn (Umkehrschleife, Station, etc.) bei laufenden Verbrauchern (Heizung uvm).

Um diese Nachteile zu beseitigen wurde schon vorgeschlagen, den Fahrdraht insbesondere im Bereich von Haltestellen mit einer Vielzahl einzelner, beweglich gelagerter Flächenelemente zu versehen. Eine derartige Anordnung ist jedoch äußerst kompliziert.

Die Erfindung hat es sich zum Ziel gesetzt, eine Vorrichtung der eingangs genannten Art zu schaffen, welche einfach herzustellen ist und eine erhebliche Vergrößerung der Kontaktflächen ermöglicht.

Erreicht wird dies dadurch, dass auf den Fahrdraht ein U-förmiger Bügel aufgesteckt ist, wobei die beiden Enden der Schenkel des "U" in einer Ebene mit der Kontaktfläche des Fahrdrahtes liegen.

Bei einer erfindungsgemäßen Vorrichtung vergrößern die beiden Enden der Schenkel des "U" die Kontaktflächen, wobei die Vergrößerung von der Stärke der Schenkel abhängt.

Der Bügel kann auf verschiedene Weise mit dem Fahrdraht verbunden werden, besonders zweckmäßig, weil einfach, ist es, wenn der Bügel mittels einer Schnappverbindung mit dem Fahrdraht verbunden ist.

Diese Schnappverbindung wird dann erreicht, wenn der Bügel federnde Nasen aufweist, die in die Rillen des Fahrdrahtes einschnappen.

Beim Aufstecken des Bügels auf den Fahrdraht ist das ungewollte Verdrehen dessen zu verhindern. Dazu werden Nasen verwendet, die den Fahrdraht führen oder sich an dessen Rillen abstützen.

Um ein schonendes, kollisionsfreies Auflaufen des Pantographen vom Fahrdraht auf den Bügel zu gewährleisten, sind im Rahmen der Erfindung an den beiden Enden des Bügels die Schenkel des "U" zunehmend verkürzt.

Bei Bedarf können seitliche Ausnehmungen am Bügel vorgesehen werden, um das Gewicht des Bügels zu reduzieren.

Um eine gute Stromleitfähigkeit zu erhalten, besteht der Bügel zweckmäßig aus Kupferblech oder einem Blech aus einer Kupferlegierung.

Nachstehend ist die Erfindung anhand mehrerer in den Zeichnungen dargestellter Ausführungsbeispiele näher beschrieben, ohne auf diese Beispiele beschränkt zu sein.
Figur 1 zeigt die Ansicht eines Teilstückes eines Fahrdrahtes mit aufgestecktem Bügel.
Figur 2 zeigt die Ansicht eines Fahrdrahtes mit zwei aufgesteckten Bügeln, an deren Stoßstelle.
Figur 3 zeigt eine schaubildliche Ansicht eines Fahrdrahtes mit einem aufgesteckten Bügel.
Figur 4 zeigt einen Querschnitt durch einen Fahrdraht mit aufgestecktem Bügel auf der Höhe der horizontalen Nasen.
Figur 5 zeigt einen Querschnitt durch einen Fahrdraht mit aufgestecktem Bügel auf Höhe der vertikalen Nasen.
Figur 6 zeigt das Ende eines Bügels aufgesteckt auf einen Fahrdraht in vergrößerter Darstellung.
Figur 7 zeigt das Ende eines Bügels zum Aufstecken auf einen Fahrdraht.

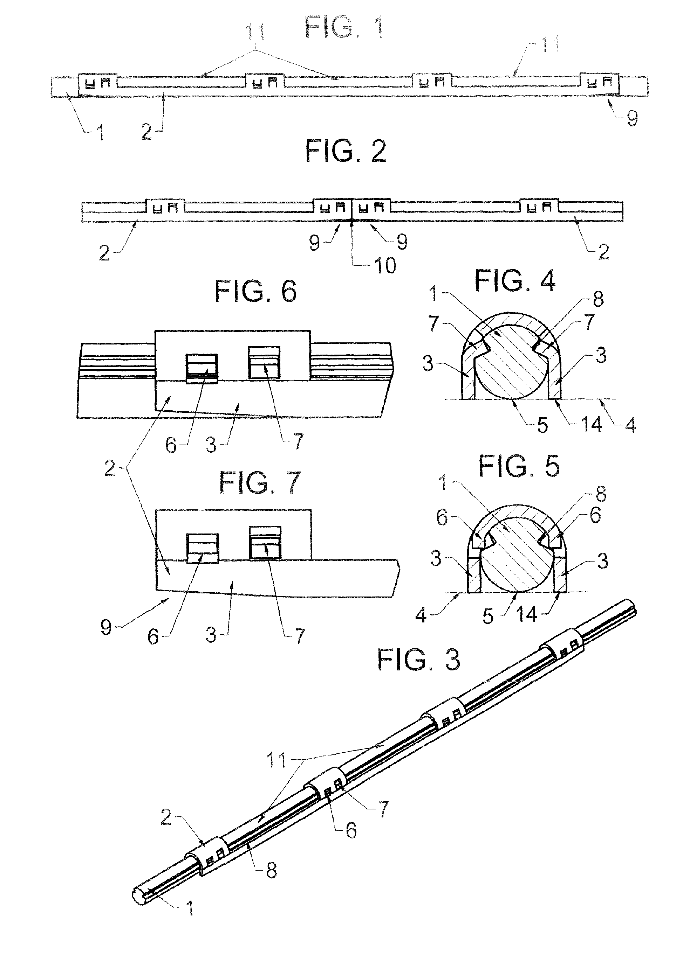

Gemäß Figur 1 ist auf einem Fahrdraht 1 ein U-förmiger Bügel 2 aufgesteckt, der zur Vergrößerung der Kontaktflächen dient. Die U-förmige Ausführung des Bügels ist in den Figuren 4 und 5 dargestellt.

Die beiden Enden 14 der Schenkel 3 des U-förmigen Bügels 2 liegen in einer Ebene 4 mit der Kontaktfläche 5 des Fahrdrahtes.

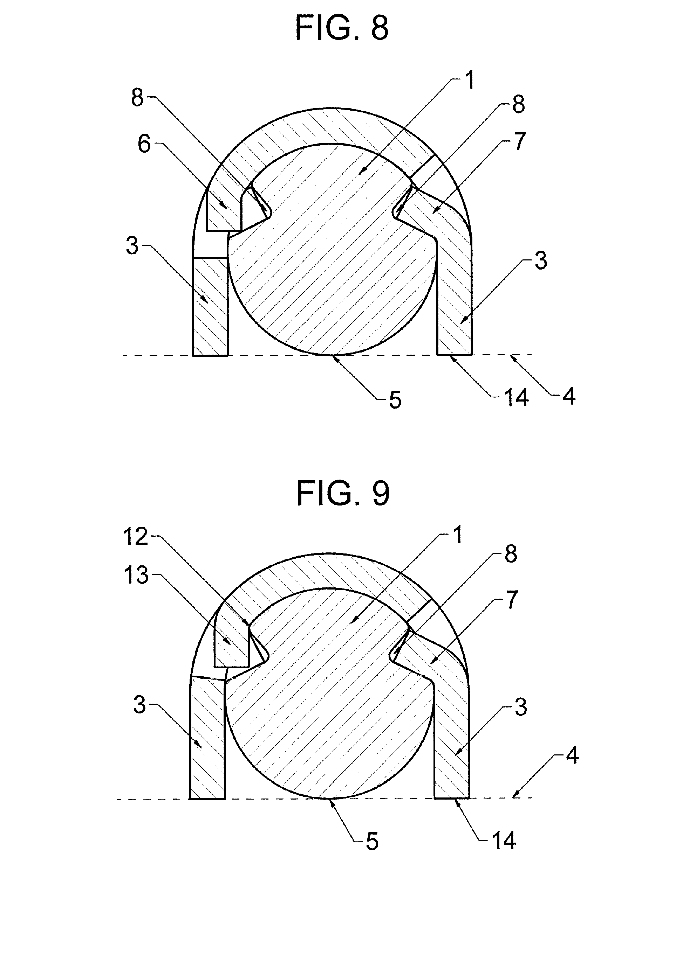

Der Bügel 2 besitzt gemäß den Figuren 8/9 zwei Nasen 6 und 7. Die federnde Nase 7 schnappt beim Aufstecken des Bügels 2 in die Rille 8 des Fahrdrahtes ein. Dadurch wird eine sichere und einfache Befestigung des Bügels 2 auf dem Fahrdraht erreicht.

Im Rahmen der Erfindung können zwei Ausführungsvarianten zum Einsatz kommen.

Variante 1 - Figur 8:
Beim Aufstecken des Bügels 2 auf den Fahrdraht 1 stützt sich der Bügel beidseitig mit der vertikalen Nase 6 an der Rille 8 des Fahrdrahtes 1 ab und gewährleistet so ein zentriertes Aufstecken.

Variante 2 - Figur 9:
Die vertikalen Nasen 13 dienen dabei zum Führen der Kanten 12 des Fahrdrahtes. Durch diese Führungswirkung wird ein zentriertes Aufstecken des Fahrdrahtes 1 auf den Bügel 2 erreicht.

Der Bügel 2 ist an den Stellen zwischen den Nasen 6 und 7 ausgenommen. Diese Ausnehmungen 11 können zur Gewichtsreduktion herangezogen werden. Im Rahmen dieser Erfindung ist eine Abänderung dahingehend möglich, dass keine Materialausnehmungen vorgesehen werden, um eine höhere Steifigkeit des Bügels 2 zu erreichen.

Um ein schonendes Auflaufen des Pantographen der elektrischen Bahn von einem nicht mit einem erfindungsgemäßen Bügel 2 versehenen Teil des Fahrdrahtes 1 auf den Bügel 2 zu gewährleisten, sind an beiden Enden 9 des Bügels 2 die Schenkel 3 des "U" zunehmend verkürzt.

Die Kontaktflächen könnten durch folgende Möglichkeiten vergrößert werden. Einerseits werden die Schenkel 3 des Bügels 2 verbreitert ausgebildet. Andererseits wird die Stärke des

Bügelblechs angehoben und somit der Querschnitt der Kontaktfläche vergrößert.

## Patentansprüche

1. Vorrichtung zur Kontaktflächenvergrößerung zwischen einem Fahrdraht (1) von elektrischen Bahnen und einem Stromabnehmer, **dadurch gekennzeichnet, dass** auf den Fahrdraht (1) ein U-förmiger Bügel (2) aufgesteckt ist, wobei die beiden Enden der Schenkel (3) des "U" in einer Ebene (4) mit der Kontaktfläche (5) des Fahrdrahtes (1) liegen.

2. Vorrichtung nach Anspruch 1, **dadurch gekennzeichnet, dass** der Bügel (2) mittels einer Schnappverbindung mit dem Fahrdraht (1) verbunden ist.

3. Vorrichtung nach Anspruch 2, **dadurch gekennzeichnet, dass** der Bügel (2) federnde Nasen (6) aufweist, die in die Rillen (7) des Fahrdrahtes (1) einschnappen.

4. Vorrichtung nach Anspruch 1, **dadurch gekennzeichnet, dass** der Bügel (2) neben der jeweiligen federnden Nase (7) eine weitere Nase (6 und 13) aufweist, die das zentrierte Aufstecken des Bügels (2) auf den Fahrdraht (1) ermöglicht.

5. Vorrichtung nach einem der Ansprüche 1 bis 4, **dadurch gekennzeichnet, dass** an den beiden Enden (9) des Bügels (2) die Schenkel (3) des "U" zunehmend verkürzt sind.

6. Vorrichtung nach einem der Ansprüche 1 bis 5, **dadurch gekennzeichnet, dass** der Bügel (2) seitliche Ausnehmungen (11) aufweist.
